## Europäisches Patentamt
## European Patent Office
## Office européen des brevets

(11) Veröffentlichungsnummer: **0 295 208**
**A1**

(12) **EUROPÄISCHE PATENTANMELDUNG**

(21) Anmeldenummer: 88810359.5

(22) Anmeldetag: 02.06.88

(51) Int. Cl.⁴: **B 25 J 15/02**
B 25 J 15/08, B 25 J 9/10

(30) Priorität: 11.06.87 CH 2193/87

(43) Veröffentlichungstag der Anmeldung:
**14.12.88 Patentblatt 88/50**

(84) Benannte Vertragsstaaten: **AT CH DE FR LI**

(71) Anmelder: **GEBRÜDER SULZER
AKTIENGESELLSCHAFT
Zürcherstrasse 9
CH-8401 Winterthur (CH)**

(72) Erfinder: **Servis, Wilhelm
Gutstrasse 51
CH-8400 Winterthur (CH)**

(54) Greiferwerkzeug für Roboter und Anordnung von derartigen Greiferwerkzeugen.

(57) Das Greiferwerkzeug für einen Roboter hat einen Greiffinger 2 mit einem Greiferorgan 43 zum Greifen von Werkstücken 7. Der Greiffinger 2 ist in einer Bohrung des Gehäuses 11, mit Antriebsmitteln 50, 51, in Richtung einer Achse S vor- und rückwarts verschiebbar und mit Antriebsmitteln 60, 61, 62 um diese Achse S drehbar. Ein derartiges Greiferwerkzeug ermöglicht das schnellere und präzisere Drehen und Positionieren von Werkstücken y auch mit einfacheren, langsameren und kostengünstigeren Robotern. Besonders günstige Verhältnisse ergeben sich bei Anordnungen mehrerer derartiger Greiferwerkzeuge in einem Mehrfach-Greiferwerkzeug und beim Verwenden des Mehrfach-Greiferwerkzeugs als Werkstück-Hinreich- und/oder Haltevorrichtung zu Bearbeitungsmaschinen wie bespielsweise Schleifmaschinen, auf denen die Werkstücke mehreren sich folgenden Arbeitsgänge unterzogen werden.

Fig 1

EP 0 295 208 A1

**Beschreibung**

## Greiferwerkzeug für Roboter und Anordnung von derartigen Greiferwerkzeugen

Die Erfindung bezieht sich auf ein Greiferwerkzeug für Roboter, mit einem in einem Greiffinger angeordneten Greiforgan zum Greifen von Werkstücken und mit Antriebsmitteln für das Greiforgan, sowie auf eine Anordnung mehrerer derartiger Greiferwerkzeuge zu einem Mehrfachgreiferwerkzeug.

Greiferwerkzeuge für Roboter werden im Bereich des sogenannten Handgelenks am Arm des Roboters befestigt. Sie weisen ein oder mehrere Greiforgane auf, welche beim Fassen von Werkstücken zusammenwirken. Das einmal gefasste Werkstück bleibt bis zum Wiederloslassen desselben im Greifwerkzeug fest fixiert. Irgendwelche Bewegungen und/oder Wege, die mit dem Werkstück durchgeführt und/oder zurückgelegt werden sollen, werden vom eigentlichen Roboterarm mit Ober- und Unterarm sowie mit dem Handgelenk durchgeführt.

Die Europäische Patentschrift EP 0 060 896 beschreibt beispielsweise eine derartige Roboterhand, die zwei Paare senkrecht zueinander wirkender Greifer aufweist. Das Werkzeug ist fest mit dem Handgelenk des Roboters verbunden und Bewegungen der Hand werden vollständig vom Roboterarm durchgeführt.

Die PCT-Offenlegungsschrift WO 86/03156 zeigt ein der menschlichen Mittelhand mit Fingern nachgebildetes Greiferwerkzeug, dessen Finger für das Durchführen komplizierter Greifbewegungen geeignet sind.

Diese beiden Roboterwerkzeuge bilden aber - für sich allein betrachtet - bei erfasstem Werkstück eine starre Einheit. Die Greiferwerkzeuge sind nicht in der Lage, mit erfassten Werkstücken, für sich allein, selbständig Bewegungen auszuführen. Bewegungen mit dem Werkstück werden allein vom Roboterarm und seinem Handgelenk durchgeführt. Roboter, die kleine und präzise Bewegungen schnell ausführen können gehören zur oberen Preisklasse. Roboter der untern Preisklassen sind langsamer und/oder zuwenig präzis und brauchen relativ viel Zeit für die Bewegungsabläufe. Dies kann den wirtschaftlichen Einsatz von Arbeitsrobotern, insbesondere auch im Zusammenwirken mit anderen Bearbeitungs- oder Montagemaschinen, deren Betriebskosten selbst hoch sind, in Frage stellen, da die nichtproduktiven Wartezeiten zu hoch, oder geeignete, schnellere und präzise Roboter zu teuer und damit nicht mehr wirtschaftlich sind.

Die Erfindung schafft ein Greiferwerkzeug, dass in der Lage ist, kleine und präzise Bewegungsabläufe schnell auszuführen und so die Arbeitsgeschwindigkeit von Robotern zu erhöhen. Nach der Erfindung ist ein derartiges Greiferwerkzeug dadurch gekennzeichnet, dass das Greiferwerkzeug Mittel zum Verschieben des Greiffingers in Richtung einer Achse und zum Drehen um diese Achse aufweist. Die abhängigen Ansprüche beziehen sich auf besonders vorteilhafte Weiterbildungen der Erfindung. Besondere Vorteile bringen derartige Greiferwerkzeuge nach der Erfindung bei einer Anordnung mehrer derartiger Greiferwerkzeuge zu einem Mehrfachgreiferwerkzeug. Wenn beispielsweise an einer Bearbeitungsmaschine, welche mehrere Werkstücke gleichzeitig bearbeitet, diese Werkstücke nach einer ersten Arbeitsoperation für die nächste Operation von der Robotereinrichtung gedreht werden müssen, so kann dies z.B. durch gemeinsames Zurückziehen, Drehen und wieder Vorschieben der Greiffinger erfolgen, ohne dass das Handgelenk des Roboters oder gar der ganze Roboterarm eine umständliche und zeitraubende Drehung des ganzen Greiferwerkzeugs ausführt. Die Haltevorrichtung im Greiffinger, das Greiforgan für das Werkstück kann eine Klemm- oder irgend eine andere Haltevorrichtung bekannter Bauweise sein.

Die Erfindung wird anhand der Zeichnungen, welche Ausführungsbeispiele eines Greiferwerkzeugs und Einzelheiten davon zeigen näher erläutert.

Es zeigen:

Fig. 1 die schematische, teilweise geschnittene Seitenansicht eines erfindungsgemässen Greiferwerkzeugs;

Fig. 2 schematisch, in einer Aufsicht den Antrieb mit dem doppelwirkenden Kolben für den Antrieb der Zahnstange und das Drehen des oder der Greiferfinger;

Fig. 3 schematisch ein weiteres Beispiel für einen Antrieb der Zahnstange und das Drehen des oder der Greiferfinger;

Fig. 4 die teilweise geschnittene Seitenansicht eines Greiferfingers mit einem Greiforgan zum Greifen von Werkstücken;

Fig. 5 schematisch einen Roboterarm mit einem Zehnfachgreiferwerkzeug nach der Erfindung in einer Seitenansicht;

Fig. 6 schematisch das Zehnfachgreiferwerkzeug von Fig. 5 in einer Aufsicht;

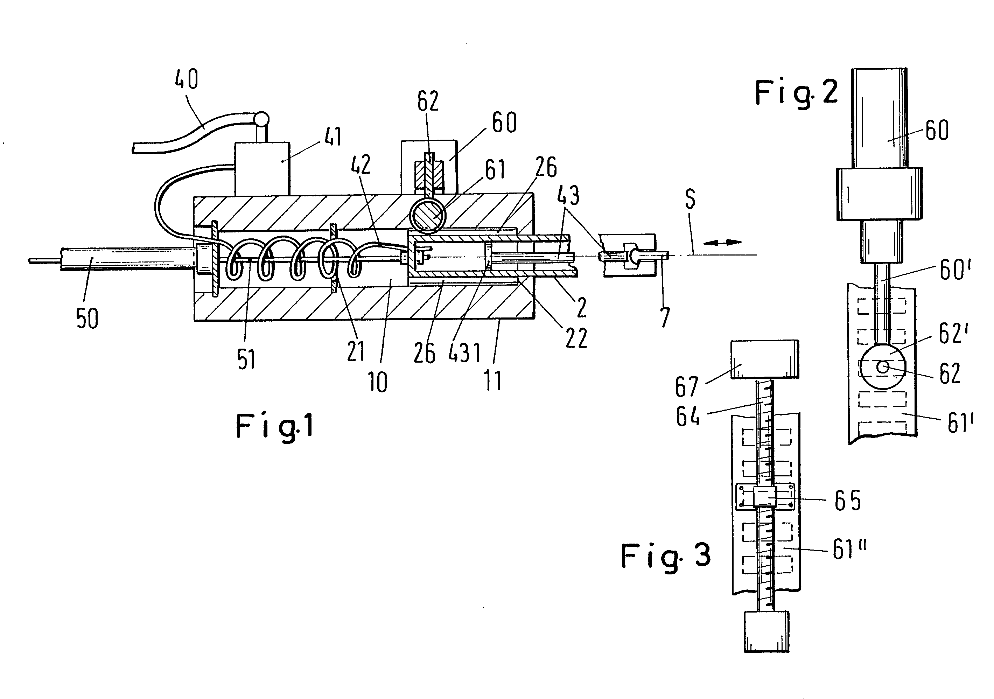

Das Greiferwerkzeug 1 von Fig. 1 besteht im wesentlichen aus dem Gehäuse 11 mit der Bohrung 10, in welcher der Greiferfinger 2 geführt und gelagert ist. Der Greiferfinger 2 ist in Richtung der Symmetrieachse S, in Pfeilrichtung vor- und rückwärts verschiebbar und um diese Symmetrieachse S drehbar. Der Antrieb des Greiforgans 43 zum Greifen der Werkstücke 7 erfolgt mit Druckluft, welche über den Druckschlauch 40, das Steuerventil 41 und den Spiralschlauch 42 auf das kolbenähnliche Endstück 431 des Greiforgans 43 einwirken. Das Vor- und Rückbewegen des Greiferfingers 2 erfolgt mit dem Druck-Zug-Kabel 51, das im Mantel 50 verläuft. In der gezeigten Ausführung bewegt sich der Greiferfinger 2 von einem hintern Anschlag am Anschlagring 21 und einem vorderen Anschlag am Absatz 22 in der Bohrung 10 des Gehäuses 11 hin und her. Mit dem Druck-Zug-Kabel 51 wäre es aber auch möglich, Zwischenpositionen anzusteuern. Als Antrieb für das Druck-Zug-Kabel 51 eignet sich beispielsweise ein hydraulischer oder pneumatischer Kolben, ein elektromagnetischer angetriebener Kolben oder ein Schrittmotor, dessen Drehbewegung in eine Liniearbewegung umgesetzt wird.

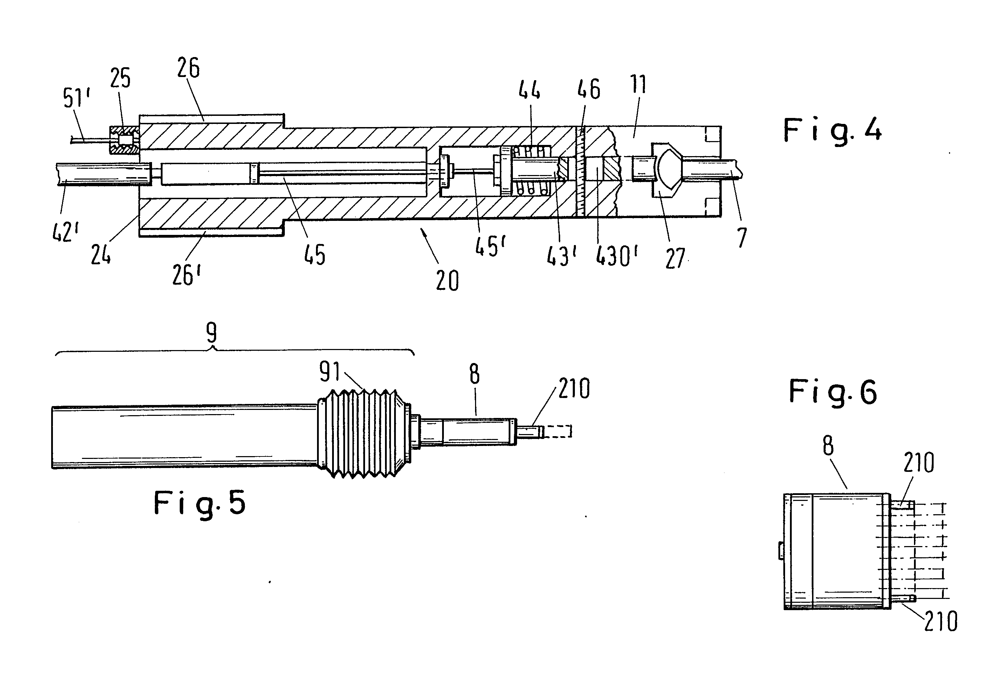

Der pneumatische beidseitig wirkende Antriebskolben 60 fasst einen mit der runden Zahnstange 61 fest verbundenen Nocken 62. Die Zahnstange 61 greift in die aussen am Greiferfinger 2 vorhandene Zahnung 26. Das Hin- und Herbewegen der Zahnstange 61 bewirkt das Drehen des Greiferfingers 2 um seine Achse. Wenn mehrere Greiferfinger 2 in einem Gehäuse zu einem Mehrfach-Greiferwerkzeug (Fig. 5 und 6) vorhanden sind, können alle oder Gruppen von Greiferfingern von einer einzigen Zahnstange angetrieben sein. Wenn der Antrieb gruppenweise gleich erfolgt, kann für jede Gruppe von Fingern ein Zahnstangenantrieb der beschriebenen Art vorgesehen sein.

Das Drehen des Greiferfingers 2 könnte auch mit einem z.B. in der Verlängerung des Greiferfingers 2 hinten angebrachten Elektromotor, z.B. einem Schrittmotor erfolgen. In einem Mehrfach-Greiferwerkzeug ist es denkbar, für jeden Greiferfinger 2 einen individuell ansteuerbaren Motor, oder Motoren, die in Gruppen individuell ansteuerbar sind, vorzusehen. An Stelle des Steuerventils 41 könnten auch ein oder mehrere Vielfach-Steuerventile die Vor- und Rückbewegung mehrerer Greiforgane 43 eines Mehrfach-Greiferwerkzeugs steuern. Der Antrieb für das Greiferorgan könnte auch magnetisch, mit Unterdruck oder sonstwie erfolgen. Das Greiferwerkzeug könnte auch ein sogenanntes intelligentes Sensorsystem aufweisen, das selbsttätig, z.B. mit optischen Sensoren oder Tastsensoren, zu erfassende Werkstücke zu erkennen vermag und/oder zu erkennen vermag, wenn ein Werkstück in richtiger Position und mit den richtigen Haltekräften erfasst ist.

Die Kolbenstange 60' des doppeltwirkenden, pneumatischen Antriebskolbens 60 von Fig. 2 weist an ihrem Ende einen Ring 62' auf, der den Nocken 62 umfasst, der mit der Zahnstange 61' verbunden ist. Derartige Koben sind dort günstig, wo der Drehwinkel vor- und rückwärts immer gleich bleibt und zwischen zwei Anschlagspositionen gearbeitet werden muss.

Der in Fig. 3 gezeigte Spindelantrieb für die Zahnstange 61″ zeigt die zweiseitig gelagerte Schraubenspindel 64, auf der eine in einem Gehäuse 66 gehaltene Schraubenmutter 65 läuft. Das Gehäuse 66 der Mutter 65 ist auf der Zahnstange 61″ befestigt. Am einen Ende ist beispielsweise ein Schrittmotor 67 als Spindelantrieb angebracht. Mit dem Schrittmotor 67 lässt sich, bei entsprechender Wahl von Motor 67, Mutter 65 und Spindel 64, jede gewünschte Drehwinkelposition des/der Greiferfinger 2 (Fig. 1) beliebig exakt wählen und einstellen.

Die Zahnstangen 61, 61', 61″ sind in den gezeigten Beispielen Rundzahnstangen. Es könnten an deren Stelle aber auch Zahnstangen einer andern, beliebigen Bauart oder auch Gewindestangen vorgesehen sein. Es wäre auch möglich, statt der Zahnstangen ein Zahnrad, das z.B. von einem Schrittmotor angetrieben wird, als Antriebselement zu verwenden. Diese Antriebsart mit gezahnten Elementen erlaubt in jedem Fall, den Greiferfinger gleichzeitig in Richtung der Längsachse zu verschieben und um diese zu drehen.

In der Schnittzeichnung von Fig. 4 ist ein Greiferfinger 20 gezeigt, an dessen hinteren Ende aussen eine Zahnung 26' für das Antreiben mit einem hier nicht gezeigten Antriebselement angebracht ist. Das Greiforgan ist ein Stössel 43', der in Bohrungen des Gehäuses 11' geführt und gelagert ist. Der Stössel 43' ist mit der Schraube 46, welche durch eine längliche Bohrung 430' des Stössels 43' verläuft, drehgesichert.

Das andere, vordere Ende des Greiferfingers 20 weist eine Ausnehmung 27 in der Form des zu ergreifenden Teils des Werkstücks 7 auf. Der Stössel 43' ist mit der Kraft der Druckfeder 44 beaufschlagt und wird pneumatisch mit der Kolbenstange 45' des Linearantriebs 45 nach vorne bewegt, wenn die Druckleitung 42' druckbeaufschlagt ist. Bei Druckentlastung der Druckleitung 42' presst die Feder 44 den Stössel wieder in die Ausgangsposition zurück. In der Haltestellung drückt der Stössel 43' gegen den zu ergreifenden Werkstückteil und klemmt das Werkstück 7 fest.

Die Vor- und Rückbewegung des Greiferfingers 20 kann beispielsweise mit einem an der hintern Stirnfläche 24 an der Schraubverbindung 25 aufgeschraubten Druck-Zug-Kabel 51' erfolgen. Der hier nicht gezeichnete Mantel des Druck-Zug-Kabels 51' ist z.B. im ebenfalls nicht gezeigten Gehäuse des Greiferwerkzeugs verankert.

Fig. 5 und 6 zeigen ein Mehrfachgreiferwerkzeug 8, mit zehn Greiferfingern 210, welche zwischen der gezeichneten und gestrichelt angedeuteten Position hin- und herbewegt werden. Das Zehnfachwerkzeug ist am sogenannten Handgelenk 91 des Roboterarms 9 angeflanscht. Der Vor- und Rückantrieb kann mit hier nicht gezeigten Druck-Zug-Kabeln individuell, in Gruppen oder gemeinsam erfolgen. Die Drehbewegung der Greiferfinger 210 um ihre Vorwärts-Rückwärts-Verschiebungsachsen kann, wie weiter oben beschrieben, beispielsweise mit hier nicht gezeigten Zahnstangen oder Schrittmotoren erfolgen. Das Betätigen der Greiforgane zum Greifen der Werkstücke kann, wie im Beispiel von Fig. 4 beschrieben, pneumatisch erfolgen. Die Zuleitungen für die Antriebselemente können ganz oder teilweise im Innern, oder frei ausserhalb des Roboterarms 9 verlaufen. Die freie Montage hat den Vorteil, dass die Teile frei zugänglich bleiben. Zudem ist eine solche Anordnung der Verbindungen möglich, dass diese Zuleitungen nicht oder höchstens teilweise Nutzlast sind, was die freie Nutzlast erhöht und die Möglichkeit bietet, bei einem bestimmten Robotertyp entsprechend massivere und leistungsfähigere Greiferwerkzeuge einzusetzen und/oder schwerere Werkstücke zu handhaben.

Der individuelle Drehantrieb um die Längsachse bringt in Fällen, wo die Werkstücke beispielsweise aufeinanderfolgend verschiedene Operationen an einer Bearbeitungsmaschine, z.B. einer Schleifmaschine durchlaufen, wesentliche Zeitgewinne. Bei einem Einfachgreiferwerkzeug etwa, hat bei einer notwendigen Drehung des Werkstücks von einer Operation zur nächsten kein langsames Anheben des Roboterarms 9 und Drehen des Handgelenks 91 zu erfolgen, sondern höchstens das leichte Anheben des Roboterarms, während das Drehen um einen vorgegebenen Winkel im Werkzeug selbst, vergleichbar zum Roboterhandgelenk sehr schnell erfolgen kann. Dasselbe gilt in noch grösserem Ausmass für ein Mehrfach-Greiferwerkzeug, indem die Bewegungen des Roboterarms beispielsweise bei einer Drehung um 180° der Werkzeuganordnung entsprechend grösser und zeitaufwendiger verlaufen. Wenn die Bearbeitungsflächen eine beliebige Winkellage am Werkstück haben und dem entspreched eine von 180° verschiedene Drehung verlangen, sind Mehrfachwerkzeuge bekannter Bauart praktisch nicht mehr verwendbar, wogegen das hier beschriebene Mehrfachgreiferwerkzeug die Drehung der Werkstücke um beliebige Winkel und anschliessend eine gleichzeitige Bearbeitung, z.B. an einer Schleifmaschine, ermöglichen.

**Patentansprüche**

1. Greiferwerkzeug für Roboter, mit einem in einem Greiffinger (2) angeordneten Greiforgan (43) zum Greifen von Werkstücken (7) und mit Antriebsmitteln (40, 41, 42, 431) für das Greiforgan, dadurch gekennzeichnet, dass das Greiferwerkzeug Mittel (50, 51) zum Verschieben des Greiffingers in Richtung einer Achse und zum Drehen (26, 60, 61, 62) um diese Achse aufweist.

2. Greiferwerkzeug nach Anspruch 1, dadurch gekennzeichnet, dass der Greiffinger (2) im wesentlichen als Kreiszylinder ausgebildet ist, der in einer zylindrischen Bohrung (10) eines Gehäuses (11) geführt ist.

3. Greiferwerkzeug nach Anspruch 2, dadurch gekennzeichnet, dass der Greiffinger ein pneumatischer oder hydraulischer Linearkolben ist.

4. Greiferwerkzeug nach einem der Ansprüche 1 oder 2, dadurch gekennzeichnet, dass elektromagnetische Mittel für das Verschieben des Greiffingers in Richtung der Achse vorhanden sind.

5. Greiferwerkzeug nach einem der Ansprüche 1 oder 2, dadurch gekennzeichnet, dass ein Druck-Zug-Kabel (50, 51) für das Verschieben des Greiffingers in Richtung der Achse vorhanden ist.

6. Greiferwerkzeug nach einem der Ansprüche 1 bis 5, dadurch gekennzeichnet, dass ein gezahntes Antriebsmittel (61) für das Drehen des Greiffingers (2) um die Achse vorhanden ist, welches in ein gezahntes Element (26) an Greiffinger (2) eingreift.

7. Greiferwerkzeug nach einem der Ansprüche 1 bis 6, dadurch gekennzeichnet, dass pneumatische oder hydraulische Antriebsmittel (60) für das Drehen des Greiffingers (2) vorhanden sind.

8. Greiferwerkzeug nach einem der Ansprüche 1 bis 6, dadurch gekennzeichnet, dass elektrische oder elektromagnetische Antriebsmittel (67) für das Drehen des Greiffingers (2) vorhanden sind.

9. Anordnung mehrerer Greiferwerkzeuge nach einem der Ansprüche 1 bis 8 zu einem Mehrfachgreiferwerkzeug (8) mit mehreren Greiffingern (210).

10. Anordnung nach Anspruch 9, dadurch gekennzeichnet, dass für das synchrone Drehen aller, oder von Gruppen von Greiffingern (210) gemeinsame Antriebsorgane (60, 60', 61', 62, 62') vorhanden sind.

11. Anordnung nach Anspruch 9 oder 10, dadurch gekennzeichnet, dass die Antriebsorgane für das Drehen der Greiffinger (210) gezahnte Elemente (61') umfassen.

12. Anordnung nach Anspruch 9 oder 10, dadurch gekennzeichnet dass eine einzige Zahnstange (61') in gezahnte Elemente jedes Greiffingers (2) eingreift.

13. Anordnung nach einem der Ansprüche 9 bis 12, dadurch gekennzeichnet, dass für die Verschiebung von Greiffingern in Richtung der Achse individuelle Antriebsorgane vorhanden sind.

14. Anordnung nach einem der Ansprüche 9 bis 13, dadurch gekennzeichnet, dass die Achsen der Verschiebung der Greiffinger parallel sind und in einer Ebene liegen.

0295208

Fig.1

Fig.2

Fig.3

40 41 42 43 50 51 60 61 62 7 S 2 22 26 10 11 21 31 26

60 60' 62' 62 61'

65 61'' 67 64

Fig.4

Fig.6

Fig.5

11 46 44 26 25 51'

27 430' 43' 45' 45 26' 24 42'

20

7

8 210

210 210 8

9 91 8 210

Europäisches
Patentamt

**EUROPÄISCHER RECHERCHENBERICHT**

Nummer der Anmeldung

EP 88 81 0359

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 463 226 (JOHNSON) * Spalte 3, Zeile 42 – Spalte 4, Zeile 42 * | 1-3,7,8 | B 25 J 15/02 B 25 J 15/08 B 25 J 9/10 |
| Y | | 4,6 | |
| A | EP-A-0 140 569 (K.K. TOSHIBA) * Zusammenfassung * | 1,9 | |
| Y | GB-A-1 245 662 (K.K. AIDA TEKKOSHO) * Seite 3, Zeilen 13-100 * | 6 | |
| Y | US-A-2 996 330 (HUTTO) * Spalte 2, Zeilen 61-65 * | 4 | |
| A | US-A-4 205 791 (DOOLEY) * Spalte 10, Zeilen 59-65 * | 5 | |
| A | DE-A-2 842 482 (W. HEGENSCHEIDT) * Seite 7, Zeilen 3-15 * | 10-12 | |

**RECHERCHIERTE SACHGEBIETE (Int. Cl.4)**

B 25 J
B 23 Q
B 65 G

Der vorliegende Recherchenbericht wurde für alle Patentansprüche erstellt

| Recherchenort | Abschlußdatum der Recherche | Prüfer |
|---|---|---|
| DEN HAAG | 05-09-1988 | LAMMINEUR P.C.G. |